# EUROPEAN PATENT APPLICATION

(11) **EP 2 725 328 A1**
(43) Date of publication of application: **30.04.2014**
(21) Application number: 13001385.7
(22) Date of filing: 18.03.2013
(51) Int. Cl.: G01F 1/684

(54) **Apparatus for measuring the flow of a fluid**

(71) Applicant: Sensirion AG, 8712 Stäfa (CH)
(72) Inventor: Mahler, Lukas, Christian, 8820 Wädenswil (CH); Von Waldkirch, Marc, Stephan, 8053 Zürich (CH); Saratz, Niculin, Andri, 8037 Zürich (CH)
(74) Representative: Toleti, Martin

(57) **Abstract**

An apparatus for measuring the flow of a fluid comprises a channel (3) for guiding the fluid. The channel (3) comprises a measuring section (8) in which measuring section (8) the channel (3) contains at least two adjacent portions (31, 32) in fluid communication with each other along a longitudinal extension of the channel (3), wherein a first portion (31) of the at least two portions (31, 32) has a height (H1) or a width (W1) less than a height (H2) and less than a width (W2) of a second portion (32) of the at least two portions (31, 32). The apparatus further comprises a flow sensor (1) for measuring the flow of the fluid in the channel (3) which flow sensor (1) is arranged in the measuring section (8) of the channel (3) at a wall defining the first portion (31).

## Description

### Technical Field

The invention relates to an apparatus for measuring the flow of a fluid, and to an associated use of such apparatus.

### Background Art

In a state of the art arrangement for measuring the flow of a fluid, a bypass structure is suggested for enabling the measurement of large flows in a main path. In such arrangement, a small portion of the fluid is branched off from the main path into a bypass. By means of a flow sensor arranged in the bypass, a flow of the small fluid portion is measured. The measured flow allows for determining a flow of the fluid in the main path. Such arrangement is described in EP 1 443 314 A2.

However, at initial operation of such apparatus the main path and the bypass are filled with gas such as air, for example. When the channel structure including the bypass now is exposed to the fluid the flow of which is to be measured, the entering fluid has to displace the air filling. In case the fluid is a liquid, the air displacement may be hard to achieve in the bypass in view of the small fluid portions and the low fluid velocity apparent in this bypass. The air may completely be removed by jetting the entire channel structure with high pressure prior to the beginning of measuring. However, such additional operation step is not desired.

On the other hand, many attempts of measuring the flow of a fluid directly in the main path have failed in view of using micro-scale flow sensors for macro-scale flows which may lead to insufficient measurement results.

### Disclosure of the Invention

Hence, it is a general object of the invention to provide an apparatus suited for directly measuring the flow of a fluid in a channel conveying the total of the fluid without the need for providing a bypass structure.

The problem is solved by an apparatus for measuring the flow of a fluid according to the features of claim 1.

The apparatus contains a channel for guiding the fluid. The channel comprises a measuring section in which measuring section a flow sensor is arranged for measuring the flow of the fluid in the channel. The measuring section is understood as a section of the channel in a longitudinal direction which longitudinal direction coincides with the flow direction of the fluid. The measuring section of the channel contains at least two adjacent channel portions. The at least two adjacent channel portions are in fluid communication with each other along the channel in the measurement section. Hence, these at least two portions qualify in that the first portion has a height less than a height of the second portion and less than a width of the second portion. Alternatively or, in addition, the first portion has a width less than the height of the second portion and less than the width of the second portion. Given that the channel has a longitudinal extension in direction of the flow of the fluid, its height and width are the dimensions orthogonal to the longitudinal extension of the channel such that the height and the width define a cross section of the channel. Accordingly, in the measurement section the cross section of the channel may imaginary be split into the at least two portions wherein the first portion qualifies by its lower height and/or width with respect to the height and the width of the second portion. Hence, the channel preferably has a cross section in the measurement section with a non uniform height and/or width. In a preferred embodiment, the first portion is the portion that has a smallest distance between opposite walls of all opposite walls of the channel in the measurement section. Specifically, the first portion has a distance between opposite walls less than a distance of any opposite walls of the second portion. In other words, the first portion may preferably also be referred to as portion of the channel with the smallest transversal dimension between opposite walls. Such first portion may preferably further be defined in its virtual interface to the second portion by a straight line between these opposing walls, all in a cross section view of the channel. By such dimensioning the friction between the walls and the fluid is increased in the first portion in comparison to all other portions of the channel such that in the first portion the fluid velocity becomes reduced, again in comparison to all other portions, which in turns allows the flow sensor to directly sense the flow of the fluid in the main path channel.

However, given that the channel only imaginary is split into the portions, the first portion and the second portion are open towards each other along the longitudinal extension of the channel. In other words, the channel portions are in fluid communication with each other along the length of the measurement section such that fluid in the first portion can at any location along a length of the measurement section migrate into the second portion and vice versa. Specifically, a transition between the first portion and the second portion is free of barriers along the length of the measurement section.

The flow sensor for measuring the flow of the fluid in the channel now is arranged at a wall defining the first portion of the channel in the measurement section. Preferably, "arranged at a wall" may include one of arranged at the wall inside the channel, arranged at the wall outside the channel, and integrated into the wall, e.g. by replacing a part of the wall with the flow sensor.

It is understood that for directly measuring the flow of a fluid in the channel supposed to convey the total of the fluid, it is desired to reduce the flow velocity at the location of measurement, i.e. at the location of the flow sensor. For example, in case a thermal flow sensor is used including a heater, high speed flows may rapidly carry away the heating power supplied by the heater. However, an increase in the heating power is not advisable in micro-scale sensors. Hence, the present approach supports lowering the velocity of flows at the measurement location by this enabling the use of micro-scale sensors for directly measuring flows in the channel. In general, it is envisaged by the present idea to provide means for reducing the velocity of the flow of the fluid at or nearby the measurement location, which means may preferably include opposing walls in the first portion with a distance less than a distance between any opposite walls in the second portion.

For locally reducing the flow velocity, it is preferred to make use of frictional forces between the fluid and walls building the channel. Hence, it is preferred to arrange the flow sensor in an area with sufficient exposure of the fluid to the walls of the channel which preferably is the case for, for example, a bulge in the cross section of the channel with respect to a portion carrying the main portion of the fluid. In general, the portion of the channel exposing a sub-flow of the fluid to a sufficient friction thereby lowering the velocity of the sub-flow is denoted as first channel portion, such that in the above example, the bulge would be considered as the first channel portion.

The first portion, however, is not separated from the second portion but allows for a fluid communication in between. The second portion carries the majority of the fluid to be conveyed in the channel while the first portion carries a smaller sub-flow of the fluid. The fluid in the first portion is exposed to a higher wall friction due to the smaller dimensioning of the first portion with respect to the second portion. The wall friction in the first channel portion locally reduces the velocity of the fluid in this first portion.

Preferably, a cross section area of the first portion is smaller than a cross section area of the second portion which causes the above mentioned slow down in velocity of the fluid passing the first portion. Given that the first portion and the second portion are preferably connected free of barriers, any undesired residuals in the first portion of the channel such as a gas in case of liquid flow sensing or a liquid in case of gas flow sensing may at the exposure of the channel to the target fluid be removed into the second portion. Hence, any gas or liquid in the first portion easily is pushed aside into the second portion such that the operation of the apparatus can be started without any additional jetting step. This in particular is beneficial if the fluid to be applied to the channel is a liquid wherein gas may be pushed into the second section and be removed therefrom.

Hence, an apparatus including a channel with a measurement section designed for locally lowering the flow of the fluid is introduced such that a bypass is no longer required, and still the flow of the fluid can directly be measured in the "main" channel given that means are provided for reducing the velocity of a sub-flow in vicinity to the measurement location by exposing this sub-flow to higher frictional forces than is done in other portions of the channel. In addition, any detrimental residuals in the first portion may easily be pushed aside as is explained above.

Preferably, the channel comprises an inlet section followed by the measurement section in flow direction. The inlet section supplies the fluid to the measurement section and preferably has a cross section different to the cross section of the measurement section. Typically, the inlet section may contain a cross section of a rectangle or a circle as is a standard shape for fluid channels. However, the cross section may change in the measurement section. The cross section area of the inlet section may, or may not be identical to the cross section area of the measurement section.

In the measurement section it is preferred that the first portion has a height or a width less than a third of the smaller of the height and the width of the second portion. Hence, in case the height of the second portion is smaller than the width of the second portion, it is preferred that the height or the width of the first portion is smaller than the height of the second portion. And in case the width of the second portion is smaller than the height of the second portion, it is preferred that the height or the width of the first portion is smaller than the width of the second portion. Preferably, the first portion has a height or a width less than a fifth of the smaller of the height and the width of the second portion, and preferably less than a tenth of the smaller of the height and the width of the second portion. In terms of square footage of the individual portions it is preferred that the first portion has a cross section area of less than a third, or a fifth, or a tenth of the cross section area of the second portion.

In case the first portion of the channel has a rectangular cross section, it is preferred that the width of the first portion is dimensioned between two and ten times the height of the first portion. These dimensions lead to a balance between generating sufficient frictional forces on the one hand and a causing a sufficient displacement of undesired residuals from the first channel portion owed to a still small lateral distance to the second channel portion. A rectangular cross section shall also include rectangles with rounded corners as long as there are opposite parallel straight sections arranged between the rounded corners.

For other preferred embodiments of the present invention it is referred to the dependent claims.

### Brief Description of the Drawings

The embodiments defined above and further embodiments, features and advantages of the present invention can be derived from examples of embodiments of the invention to be described hereinafter in connection with the following drawings. The figures show:
FIG. 1 an apparatus for measuring the flow of a fluid according to an embodiment of the present invention, in diagram a) in a cross section view of the measurement section, in diagram b) in a top view without a cover, and in diagram c) in a longitudinal cut,
FIG. 2 several embodiments of a cross section of a measurement channel of an apparatus according to various embodiments of the present invention,
FIG. 3 an apparatus for measuring the flow of a fluid in a cross section view according to an embodiment of the present invention,
FIG. 4 an apparatus for measuring the flow of a fluid in a cross section view according to another embodiment of the present invention,
FIG. 5 an apparatus for measuring the flow of a fluid in a cross section view according to a further embodiment of the present invention, and
FIG. 6 three more cross sections of a measurement channel of an apparatus according to embodiments of the present invention.

### Modes for Carrying Out the Invention

In the figures same or similar elements are referred to by the same reference signs across all figures.

A flow sensor for measuring a flow of a fluid is arranged in a measurement section of a channel conveying the fluid. It is observed that for enabling direct flow measurements in particular for liquids, a reduction of the velocity of the liquid in the channel at the measurement location is critical to obtain a precise flow measurement. By imaginary splitting the flow of the fluid in the measurement section, and in particular prior to the location of measuring the flow, the velocity of the fluid may be reduced at least in a portion of the channel denoted as first portion exhibiting a smaller cross sectional area than any remaining portion of the channel.

Measuring the flow in the first portion provides for better measurement results given that the area of friction is increased for a sub-flow of the fluid in said first portion in view of a short distance to the walls defining said first portion which evokes a reduction of the fluid velocity. Insofar, the apparatus may be understood as a device for locally reducing the velocity of the fluid at the measurement location.

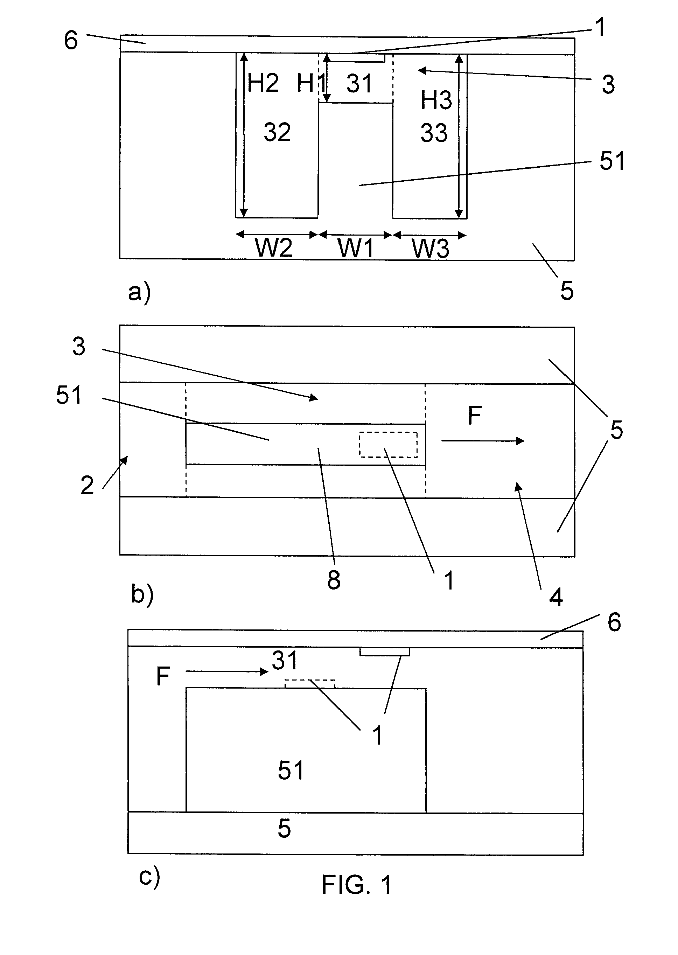

FIG. 1 illustrates an apparatus for measuring the flow of a fluid according to an embodiment of the present invention, in diagram a) in a cross section view in the measurement section, in diagram b) in a top view without a cover, and in diagram c) in a longitudinal cut.

The apparatus comprises a body 5 and a cover 6 defining a channel 3. The cover 6 carries a flow sensor 1 for measuring the flow of a fluid in the channel 3. Hence, the present section of the channel 3 is referred to as a measurement section given that it is the location of the flow sensor 1. In this measurement section the channel 3 takes a "U" - like shape (rotated by 180°). In order to better address the geometry of the channel 3, the channel 3 is imaginary split into a first portion 31, a second portion 32, and a third portion 33, wherein the second and third portions 32 and 33 contribute to the legs of the "U" while the first portion 31 connects the two legs of the "U". Although the individual portions 31, 32 and 33 are separated by dotted lines, these dotted lines do not represent barriers but rather represent imaginary transitions between the portions 31, 32, 33.

The second and third portions 32 and 33 show a cross section area larger than a cross section area of the first portion 31. In particular, a height H1 of the first portion 31 is less than a height H2 or H3 of each of the second and third portions 32 and 33. Widths W1, W2, W3 of the individual portions 31, 32, 33 are essentially the same. However, the height H1 of the first portion is less than the widths W2 and W3 of the second and third portions 32, 33. In view of the reduced height H1 of the first portion 31 compared to the second and third portions 32 and 33, a sub-flow of fluid in the first portion 31 is exposed to higher frictional forces than the sub-flows in the second and third portions 32 and 33 such that the first portion 31 of the channel 3 is a desired location for measuring the flow of the fluid by means of the flow sensor 1.

In case the channel 3 may be filled by gas prior to being filled by a target liquid, such gas in the vicinity of the measurement location can be pushed aside into the second and third portions 32 and 33 such that the measurement of the liquid no longer is impacted.

In the top view in diagram 1b), the channel 1 can be better assessed in its longitudinal extension. The channel 3 may include an inlet section 2 with a rectangular cross section. At the beginning of the measurement section referred to as 8, a part of the body 5 is provided, e.g. in form of a wall 51 or ligament protruding into the channel 3 for defining the first portion 31 of the channel 3 and the two adjacent portions 32 and 33. Rather at the end of the measurement section 8, the flow sensor 1 is arranged, see dotted lines in diagram 1b). Subsequent to the measurement section 8 the wall 51 disappears again such that an outlet section 4 of the channel 3 again provides a cross section similar to the one of the inlet section 2.

In the longitudinal cut in diagram 1c) through the first portion 31, the protruding wall 51 of the body 5 can be seen. The flow direction again is referred to by arrow F such that a sub-flow of the fluid passes the flow sensor 1 after having been decelerated by the top and the bottom wall in the first portion 31.

While generally the measurement section may be interpreted as longitudinal section in which the flow sensor is arranged, it may preferably encompass any longitudinal extension of the channel in which its cross section is modified with respect to the cross section of the inlet section. Hence, in the present example the measurement section may be defined by the longitudinal extension of the protruding wall 51 which is responsible for reducing the flow velocity. In the present example of Fig. 1 the flow sensor 1 is arranged asymmetrically at the end of the measurement section. In another embodiment, the flow sensor 1 may be arranged symmetrically in the middle of the measurement section which position is illustrated in Fig. 1c) by a dotted rectangle. With such symmetrical position of the flow sensor, flows in different direction may be measured wherein for each flow direction a sufficient portion of the wall 51 evokes a reduction in the flow velocity.

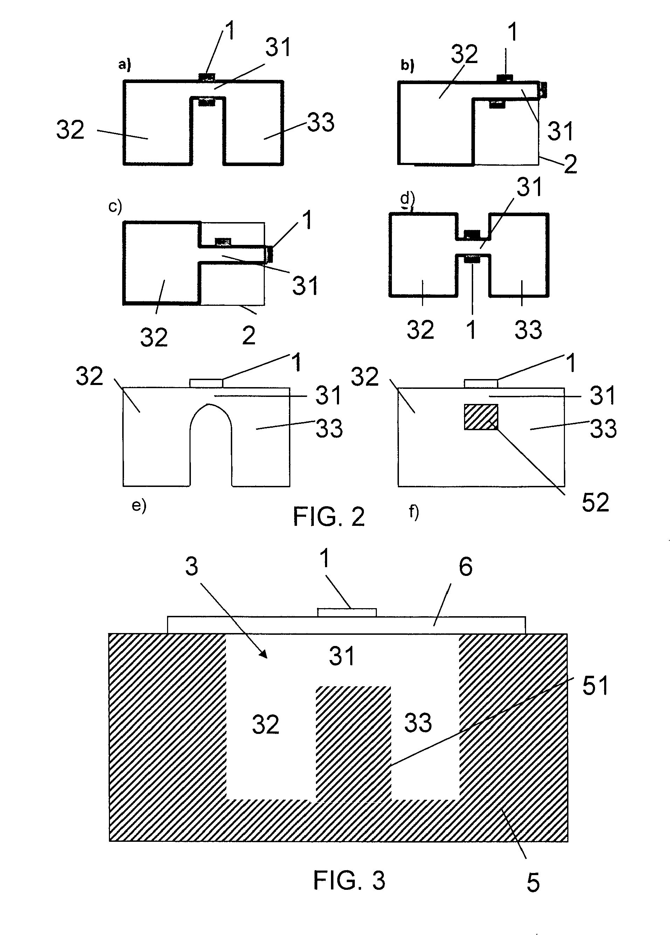

FIG. 2 illustrates in diagrams a) to f) several cross sections of channels in the measurement section according to various embodiments of the present invention. The rectangular dots represent different alternative locations the flow sensor 1 can be arranged at. The channel in diagram 2a) has a cross section according to the embodiment of FIG. 1, i.e. a "U"-shaped cross section. The channel of diagram 2d) has a similar shape in which again the first portion 31 of the channel 31 connects the second and the third portions 32 and 33, however not at the top of the "legs" but in the middle of the legs thereby contributing to an "H" like shape of the channel. The shape of the cross section channel of diagram 2e) again is similar to the one of diagram 2a), however, including rounded edges. The cross sections of channels of diagrams 2b) and 2c) in contrast do not provide for a third portion of the channel but solely provide the first and the second portions 31 and 32. In each of these embodiments, the first portion 31 emerges in form of a bulge from the second portion 32. In each of the Fig. 2b) and 2c) a cross section of the inlet section 2 is indicated in such that it shows that the bulge like first portion 31 does not necessarily constitute a bulge with respect to the inlet section 2 which might lead to an insufficient supply of fluid to such bulge but with respect to the second portion 32 of the measurement section. The cross section of the bulge therefore preferably is fully covered by a cross section of the inlet section which finally supports a sufficient supply of fluid to the bulge.

The close-by side walls in the first portion 31 again help in reducing the velocity of the sub-flow in the subject portion 31. The flow sensor 1 may in these embodiments not only be arranged at the top wall or the bottom wall of the first portion 31, but alternatively may also be arranged at a side wall of the first portion 31. The channel of diagram 2f) is formed such that the first portion 31 is defined by an insert 52.

In this respect, the shape of the channel in diagram 2b) may resemble an "L" while the shape of the channel in diagram 2c) may resemble a "T".

FIG. 3 illustrates an apparatus for measuring the flow of a fluid in a cross section view according to an embodiment of the present invention which is similar to the apparatus of FIG. 1. The cover 6 of the apparatus of FIG. 3 does not extend to the entire width of the apparatus, and the flow sensor 1 is attached to the outside of the cover 6 provided that the cover 6 is made of a material with a suitable thermal conductivity such that no direct contact to the fluid is required for the flow sensor 1 in case the flow sensor 1 is a thermal flow sensor. The wall 51 preferably is formed integrally with the rest of the body 5. The cover 6 may be attached, e.g. glued to the body 5.

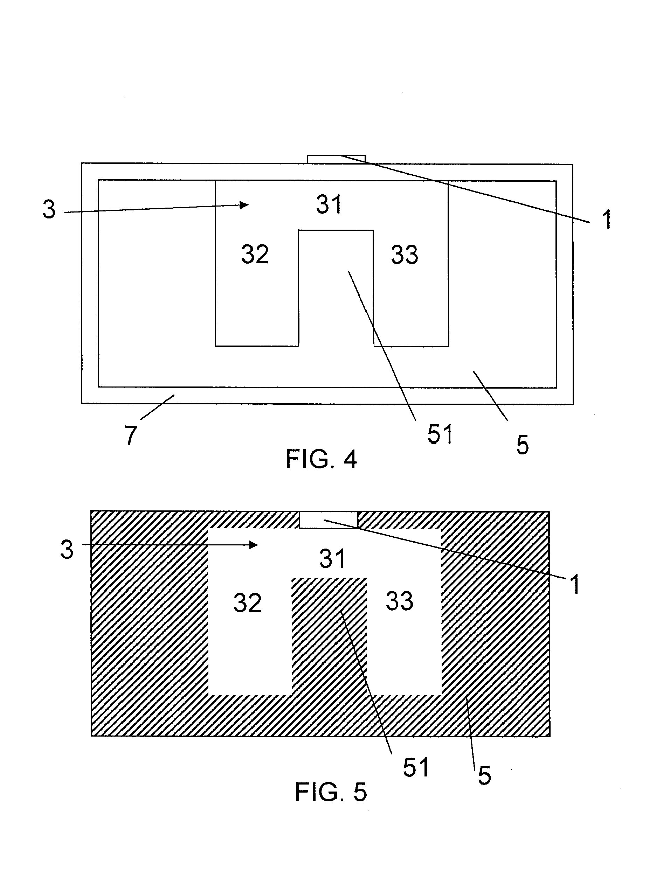

FIG. 4 illustrates an apparatus for measuring the flow of a fluid in a cross section view according to another embodiment of the present invention. In contrast to the apparatus of FIG. 3, the channel 3 now is built from a tube 7 into which a body 5 is inserted. The body 5 and the upper wall of the tube 7 define the channel 3. The flow sensor 1 is arranged on the outside of the tube 7. Preferably, the tube 7 is made of a material with a suitable thermal conductivity such that no direct contact to the fluid is required for the flow sensor 1.

FIG. 5 illustrates an apparatus for measuring the flow of a fluid in a cross section view according to a further embodiment of the present invention. In contrast to the apparatus of FIG. 3, the channel 3 now is entirely built from a monolithic body 5. The flow sensor 1 is integrated into the body 5.

The body 5 at least co-defines the channel 3 in the above embodiments and may preferably be a single piece, in particular wherein the wall 51 is formed integrally with the rest of the body 5. The body 5 may be made from, for example, metal such as aluminium or steel, from plastics, glass, concrete, PCB material, or any combination thereof. The body 5 may preferably be manufactured by one of injection moulding, any other moulding technique, mechanical milling and sintering. The cover 6, if any, may be made from any of the materials as listed above with respect to the body 5.

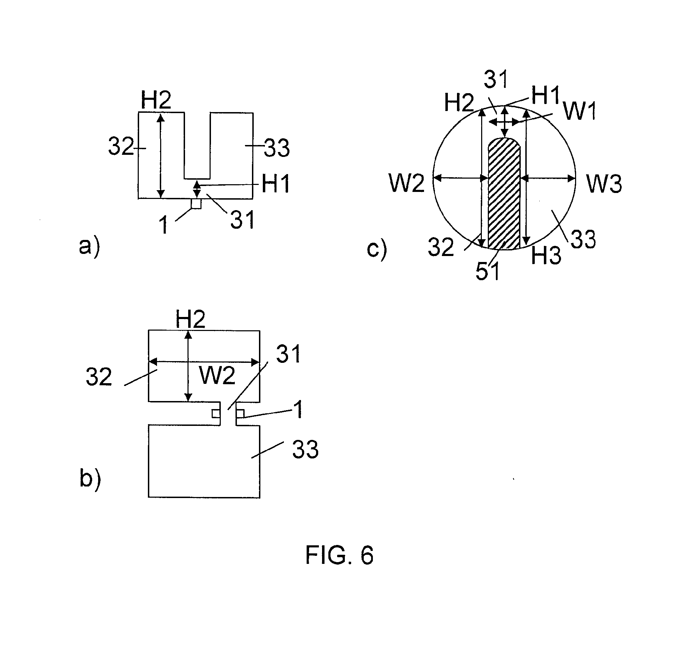

FIG. 6 illustrates in diagrams a), b) and c) three more cross sections of channels in the measurement section according to embodiments of the present invention. The channel in diagram 6a) has a cross section according to the embodiment of FIG. 2a) tilted by 180° degrees, and the channel in diagram 6b) has a cross section according to the embodiment of FIG. 2d) tilted by 90° degrees. These examples illustrate, that in most cases the heights and the widths of the channel including the heights and the widths of the different portions are interchangeable. However, in the preferred embodiment of diagram 6a), the first portion 31 is arranged with a transition to a bottom part of the second portion 32 wherein top and bottom are defined with respect to the gravity vector, and in the preferred embodiment of diagram 6b), the first portion 31 is arranged beneath the second portion 32 wherein the direction defining this relation is defined by the gravity vector. Such arrangements may be preferred for supporting the removal of unwanted gas or liquid at the beginning of operating the channel. When operating the channel with liquid, for example, any gas residuals may in such arrangement ascend from the first portion into the second portion owed to the density of the materials and the arrangement of the second portion with respect to the first portion.

The channel in diagram 6c) has a circular cross section. A bar 51 is inserted in the tube like channel and defines first, second and third portions 31, 32, and 33. The bar 51 preferably has a curved front end, which in a preferred embodiment may correspond to the curved tube in this first portion 31 such that the first portion 31 may have a uniform height H1 all along its width W1. Typically, if a measure such as the width or the height is variable in a portion of the channel, the maximum value is taken as width of height respectively, such as is introduced in diagram 6c).

Generally, with respect to all embodiments, the flow sensor may be embodied as a temperature sensing flow sensor which includes a heater between two temperature sensors. The heater heats the fluid such that a temperature measured upstream of the heater is different from a temperature measured downstream of the heater. A temperature difference between these two locations allows for determining the flow of the fluid. Hence, a preferred flow sensor to be applied is a thermal mass flow sensor. Subject to the setup of the flow sensor and the material used for the body and/or the cover if any the flow sensor may be arranged outside a path of the fluid or in direct contact with the fluid. The geometry of the cross section of the channel may be any of a symmetric or an asymmetric geometry.

An inlet and outlet port may be attached to the front ends of the body for supplying and conveying away the fluid.

The idea allows for directly measuring the flow of a fluid in the fluid transmitting channel. In an embodiment for measuring the flow of liquids, it is preferred that the channel has a diameter between 5 mm and 50 mm, without requiring a bypass arrangement for the reason that velocity and turbulences are reduced by means of the cross section shape in the measurement section. A flow of in the range of 100 ml to 10 litres per minute may, for example, be measured by such apparatus.

While there are shown and described presently preferred embodiments of the invention, it is to be distinctly understood that the invention is not limited thereto but may be otherwise variously embodied and practiced within the scope of the following claims.

## Claims

1. Apparatus for measuring the flow of a fluid, comprising
a channel (3) for guiding the fluid, the channel (3) comprising a measuring section (8) in which measuring section (8) the channel (3) contains at least two adjacent portions (31, 32) in fluid communication with each other along a longitudinal extension of the channel (3), wherein a first portion (31) of the at least two portions (31, 32) has a height (H1) or a width (W1) less than a height (H2) and less than a width (W2) of a second portion (32) of the at least two portions (31, 32), and
a flow sensor (1) for measuring the flow of the fluid in the channel (3) which flow sensor (1) is arranged in the measuring section (8) of the channel (3) at a wall defining the first portion (31).

2. Apparatus according to claim 1,
wherein the flow to be measured is the flow of a liquid.

3. Apparatus according to claim 1 or claim 2,
wherein a cross section area of the first portion (31) of the channel (3) is smaller than a cross section area of the second portion (32) of the channel (3).

4. Apparatus according to any one of the preceding claims,
wherein the measurement section (8) of the channel (3) is free of being bypassed by a bypass channel, and
wherein a transition between the first portion (31) and the second portion (32) is free of barriers along a length of the measurement section (8).

5. Apparatus according to any one of the preceding claims,
wherein the channel (3) comprises an inlet section (2) connected to the measuring section (8) for supplying the fluid to the measuring section (8), which inlet section (2) has a cross section different to the cross section of the measuring section (8).

6. Apparatus according to any one of the preceding claims,
wherein the first portion (31) has a height (H1) or a width (W1) less than a third of the smaller of the height (H2) and the width (W2) of the second portion (32), and preferably less than a fifth of the smaller of the height (H2) and the width (W2) of the second portion (32), and preferably less than a tenth of the smaller of the height (H2) and the width (W2) of the second portion (32).

7. Apparatus according to any one of the preceding claims,
wherein the first portion (31) has a straight top or bottom wall in common with the second portion (32).

8. Apparatus according to any one of the preceding claims,
wherein the first portion (31) represents a bulge with respect to the second portion (32).

9. Apparatus according to any one of the preceding claims,
wherein the first and the second portions (31, 32) both have a rectangular cross section.

10. Apparatus according to any one of the preceding claims,
wherein the channel (3) contains a third portion (33) in fluid communication with the first portion (31),
wherein the first portion (31) has a height (H1) or a width (W1) less than a height (H3) and less than a width (W3) of the third portion (33), and
wherein the second portion (32) is connected to the third portion (33) via the first portion (31).

11. Apparatus according to any one of the preceding claims,
wherein at least the measurement section (8) of the channel (3) is formed by a body (5) forming the walls of the channel (3) except for a top wall,
wherein the top wall is represented by a cover (6) attached to the body (5), and
wherein the cover (6) carries the flow sensor (1).

12. Apparatus according to any one of the preceding claims,
wherein at least the measurement section (8) of the channel (3) is formed by a body (51) except for an opening reserved for the flow sensor (1).

13. Apparatus according to any one of the preceding claims,
wherein at least the measurement section (8) of the channel (3) is formed by an insert body (5) in a tube (7).

14. Apparatus according to any one of the preceding claims,
wherein the first portion (31) starts prior to the arrangement of the flow sensor (1) in flow direction and extends at least to an end of the flow sensor (1).

15. Use of an apparatus according to any one of the preceding claims for directly measuring the flow of a fluid in a channel (3) without using a bypass.
